# EUROPÄISCHE PATENTSCHRIFT

(11) **EP 1 405 810 B1**
(45) Veröffentlichungstag und Bekanntmachung des Hinweises auf die Patenterteilung: **24.05.2006**
(21) Anmeldenummer: 03020468.9
(22) Anmeldetag: 15.09.2003
(51) Int. Cl.: B65H 63/08

(54) **Drahtspule und Restdrahterkennungsverfahren**
Wire bobbin and method for detecting remaining wire
Bobine de fil et procédé pour détecter le fil résiduel

(30) Priorität: 02.10.2002 DE 10246075
(43) Veröffentlichungstag der Anmeldung: 07.04.2004
(73) Patentinhaber: Heidelberger Druckmaschinen Aktiengesellschaft, 69115 Heidelberg (DE)
(72) Erfinder: Gräber, Jochen, 73266 Bissingen (DE); Litsche, Mario, 71522 Backnang (DE); Recht, Wolfgang, 71522 Backnang (DE)
(74) Vertreter: Franzen, Peter

(56) Entgegenhaltungen:
- CA-A- 1 270 502
- US-A- 4 676 442

## Beschreibung

Die Erfindung betrifft eine Drahtspule gemäß des Oberbegriffs des Anspruchs 1, sowie ein Verfahren zur Restdrahterkennung mit einer solchen Drahtspule.

Typischerweise werden Vorrichtungen der genannten Art eingesetzt, um Draht einer drahtverarbeitenden Maschine zur Verfügung zu stellen, zum Beispiel einer Vorrichtung, die Drahtkammbindeelemente zur Bindung von Stapeln blattförmiger Bedruckstoffe herstellt.

In Vorrichtungen, die Werkstücke oder Halbzeuge aus Draht herstellen oder Schweißdraht verbrauchen, wird Draht von einer Drahtspule abgezogen. Dass der Draht seinem Ende zugeht, kann ein Bediener einer solchen Vorrichtung häufig einfach dadurch erkennen, indem er einen Blick auf die Drahtspule wirft. In manchen Anwendungen sind diese Spulen aber entweder schwer zugänglich oder es handelt sich um eine große Anzahl von Spulen, so dass es für den Bediener umständlich ist, den Füllstand der Drahtspule manuell zu kontrollieren. Vorteilhaft ist es da, wenn es eine automatisierte Möglichkeit gibt, das baldige Drahtende zu erkennen.

Typischerweise findet der Bediener auch durch seine Inaugenscheinnahme der Drahtspule keinen akkuraten Hinweis darauf, wie viel Meter Draht noch auf der Drahtspule verblieben sind und für wie viele Schweißungen, Werkstücke oder Halbzeuge der Draht noch ausreicht. Es ist daher wünschenswert, die verbleibende Menge Draht auf der Drahtspule zu kennen, oder zumindest zu einem bestimmten Zeitpunkt, insbesondere wenn nur noch wenig Draht vorhanden ist, darüber informiert zu werden, wie viel Meter Draht noch auf der Drahtspule zur Verfügung stehen.

Verfahren und Vorrichtungen zur Restdrahterkennung sind aus dem Stand der Technik in verschiedener Art bekannt. Einige dieser Vorrichtungen oder Verfahren verwenden elektrisch resistive Methoden, bei dem mittels eines Kontaktes Strom durch den Draht geleitet wird und anhand des dabei messbaren Widerstandes des Drahts auf die Länge des Drahts geschlossen werden kann. Diese Verfahren sind aber nicht anwendbar bei kunststoffummanteltem Draht, wie er häufig für Drahtkammbindeelemente verwendet wird. Andere Verfahren verwenden optische Mittel, um die verbleibenden Menge an Draht zu bestimmen. Solche Verfahren sind typischerweise anfällig auf Verschmutzungen, außerdem erfordern diese Verfahren z.T. aufwendige und damit teure Optiken. Solche Verfahren oder Vorrichtungen sind insbesondere dann notwendig, wenn Filament auf der Drahtspule detektiert werden soll, das keine magnetischen oder elektrischen Eigenschaften hat, z.B. Garn.

Wird der Restdraht nicht erkannt, dann kann es zu schweren Beschädigungen der drahtverbrauchenden Vorrichtung kommen. Ist nicht genau bekannt, wie viel Draht noch auf der Drahtspule ist und daher die Drahtspule gewechselt wird, bevor der Draht soweit wie möglich verbraucht wurde, ist dies unwirtschaftlich.

In einer Anzahl von Verfahren, werden magnetische Mechanismen verwendet, z. B. um zu signalisieren, wie viel Metallkabel noch auf einer Spule vorhanden ist CA-A-1270 502 zeigt, eine Drahtspule für Restolrahterkennung für Draht nach dem Oberbegriff des Anspruchs 1. In CA-A-1270 502 wird beispielsweise ein Magnet in den Spulenkörper eingebracht, der in einer Wirkbeziehung mit einem Magnetsensor steht, der außerhalb der Spulenwand angebracht ist und dem Magneten bei jeder Rotation der Spule einmal gegenübersteht. Die Magnetisierung des Magneten ist dabei derart, dass die magnetischen Feldlinien durch die Kabelwindungen oberhalb des Magneten geführt werden, dadurch also rechtwinklig zu der Wickelrichtung des Kabels auf der Kabeltrommel stehen. Die durchgängige Leitung der magnetischen Feldlinien, also des magnetischen Flusses durch die nebeneinander liegenden Kabelwindungen funktioniert besonders gut, wenn das Kabel nicht ummantelt ist.

Zwischen dem Magnet und dem Magnetsensor ist fluchtend mit dem Magneten ein Zwischenelement aus einem Material in den Spulenkörper eingelassen, das eine Permeabilität aufweist, die geringer als die des Kabels ist. Befindet sich nun kein Kabel oberhalb des Magneten, so werden die magnetischen Feldlinien durch dieses Zwischenelement in die Nähe des Magnetsensors geleitet, so dass dieser ein Signal erzeugt. Dieses Signal korreliert mit der Abwesenheit des Kabels und kann daher als Hinweis dafür ausgewertet werden, dass nur noch eine vorgegebene Anzahl von Windungen auf der Drahtspule verblieben sind.

In einer japanischen Veröffentlichung JP 60015360 wird eine Vorrichtung zur Restdrahtmengenerkennung für Schweißdraht offenbart, die ebenfalls ein magnetisches Prinzip verwendet. Hierbei ist auf einem beweglichen Kontaktarm ein magnetischer Entfernungsschalter und ein Permanentmagnet angeordnet. Der Kontaktarm bleibt über eine isolierendes Element in Kontakt mit dem Draht, durch das Permanentmagnet wird bei vorhandenem Draht ein Signal in dem Magnetsensor verursacht, sobald kein Draht mehr vorhanden ist, schaltet der Magnetsensor aus, so dass ein Signal erzeugt wird, das vermittelt, dass nur noch wenig Draht auf der Drahtspule ist.

Wünschenswert wäre ein Verfahren zum Erkennen von Restdraht auf einer Drahtspule, insbesondere zur Erkennung von der Restdrahtlänge von ummanteltem Draht, das preiswert ist, eine sehr präzise Angabe der verbleibenden Meter Draht ermöglicht, eine Beschädigung der drahtverarbeitenden Vorrichtung verhindern kann, sowie ein Drahtspule, mit der ein solches Verfahren durchführbar ist.

Es ist daher die Aufgabe der Erfindung, eine Drahtspule bereitzustellen, mit der in Zusammenwirken mit einem externen Magnetsensor eine möglichst genaue Restdrahtmengenbestimmung von insbesondere ummanteltem Draht möglich ist.

Diese Aufgabe wird mit Hilfe der erfindungsgemäßen Drahtspule mit den im Anspruch 1 genannten kennzeichnenden Merkmalen gelöst. Des weiteren ist es Aufgabe der Erfindung ein Verfahren bereitzustellen, mit dem eine Erkennung von der Restdrahtlänge von ummanteltem Draht möglich ist. Diese Aufgabe wird mit Hilfe des erfindungsgemäßen Verfahrens mit den im Anspruch 10 genannten Schritten gelöst.

Demgemäss ist eine Drahtspule für Restdrahterkennung für Draht mit einem Drahtanfang und einem Drahtende, der auf einem Spulenkörper in N Wicklungen aufgewickelt ist vorgesehen, wobei der Spulenkörper beidseitig Seitenwände und eine Spulentrommel umfasst und einen Magneten aufweist, der in dem Spulenkörper befestigt ist, wobei die Einbaulauge des Magneten in dem Spulenkörper derart ist, dass die magnetischen Feldlinien entlang des Magneten im Wesentlichen parallel zu der Wickelrichtung des Drahtes auf der Drahtspule angeordnet sind.

Vorteilhafterweise handelt es sich bei dem Magneten um einen Stabmagneten, der seine magnetischen Pole an den Enden des Stabes aufweist, und insbesondere eine zylindrische Form aufweist. Ein zylindrischer Stabmagnet mit derartiger Magnetisierung erzeugt im Vergleich zu rechteckigen Stabmagnete ein homogeneres Magnetfeld in Umfangsrichtung. Der Durchmesser des Stabmagneten ist vorteilhafterweise derart gewählt, dass er das dreibis zehnfache des Drahtdurchmessers beträgt. Beispielsweise wäre bei einem Drahtdurchmesser von 1 mm ein zylindrischer Stabmagnet mit einem Durchmesser von 5 mm empfehlenswert.

Dadurch, dass die Magnetisierung des Stabmagneten im Wesentlichen parallel zu der Windungsrichtung der Drahtwindungen liegt, überdeckt eine einzelne Drahtwicklung einen erheblichen Bereich des Stabmagneten nach außen hin. Ist gegenüber dem Stabmagneten ein Magnetsensor so angeordnet, dass die Drahtwindungen zwischen dem Magnetsensor und dem Stabmagneten zu liegen kommen, so wird von einer einzelnen Drahtwindung entsprechend ein erheblicher Anteil des von dem Stabmagneten ausgehenden Magnetfeld abgeschirmt. Typischerweise wird die Drahtspule gedreht und der Draht dabei tangential abgezogen. In diesem Fall trifft sich das Magnet und der Magnetsensor einmal pro Umdrehung. Der Magnetsensor, beispielsweise ein Reed-Relais, wird also mit der Genauigkeit von ein bis zwei Drahtwindungen auf der Drahtspule ansprechen können. Bei einem Durchmesser der Drahtspule von ca. 30 cm entspricht das einer Genauigkeit von 1 bis 2 Metern Draht.

In einer vorteilhaften Ausgestaltung der erfindungsgemäßen Drahtspule weist der Magnet eine Entfernung zu einer Spulenwand auf, so dass eine bestimmte Anzahl von Drahtwicklungen n auf der Spulentrommel verbleiben, sobald alle Wicklungen über dem Magneten abgewickelt wurden. Diese Anzahl n verbleibende Windungen entspricht, multipliziert mit dem Umfang der Drahtspule gerade der verbliebenen Drahtlänge auf der Drahtspule. Diese Information ist mit dem oben erwähnten Fehler von ein bis zwei Drahtwindungen behaftet, dieser Fehler ist allerdings absolut und relativiert sich mit steigender Anzahl n der verbleibenden Drahtwindungen. Die Steuerung einer drahtverarbeitenden Vorrichtung kann diese Information über die Restdrahtlänge verwenden, um abzuschätzen, wie viele weitere Werkstücke oder Halbzeuge angefertigt werden können und kann den Bediener der drahtverarbeitenden Vorrichtung darauf hinweisen. Die Anzahl n der verbleibenden Drahtwindungen kann auf die Anwendung der drahtverarbeitenden Vorrichtung angepasst sein, wird aber stets mindestens so groß sein, dass der Auftrag, bei dem die drahtverarbeitenden Vorrichtung am meisten Draht verwendet, auf jeden Fall noch abgearbeitet werden kann.

In einer weiteren vorteilhaften Ausgestaltung der erfindungsgemäßen Drahtspule liegen die ersten Windungen auf der Spulentrommel dicht nebeneinander und / oder sind von einem Klebelement lose fixiert. Dadurch kann gewährleistet werden, dass tatsächlich die angenommene Anzahl von Drahtwindungen zwischen dem Magneten und dem Drahtende vorhanden ist. Die Verwendung eines beidseitig klebenden Klebebandes verbessert und erleichtert die Wicklung dabei noch. Außerdem garantiert das beidseitig klebende Klebeband, dass bei Abwickeln die letzten Windungen tatsächlich Windung an Windung bleiben und nicht frühzeitig die Abschirmung des Magneten durch den Draht verlorengeht. Unter losem Fixieren versteht sich in diesem Zusammenhang, dass die Drahtwindungen zwar an dem beidseitig klebenden Klebeband anhaften, aber mit einem Kraftaufwand, mit dem der Draht von der Drahtspule abgezogen wird, mühelos und verformungsfrei abgelöst werden können. Neben einem beidseitig klebenden Klebeband sind auch alternaive Befestigungsmethoden aus dem Stand der Technik anwendbar, die ein entsprechendes loses Fixieren der Drahtwindungen erlauben.

In einer weiteren vorteilhaften Ausgestaltung der erfindungsgemäßen Drahtspule umfasst die Vorrichtung zudem eine einsteckbare Magnethalterung, vermittels der der Magnet in der Drahtspule positioniert wird. Auf diese Weise lässt sich eine einfache und preiswerte Art der Montage der erfindungsgemäßen Drahtspule realisieren und gleichzeitig eine große Präzision in der Positionierung des Stabmagneten gewährleisten.

In einer weiteren vorteilhaften Ausgestaltung der erfindungsgemäßen Drahtspule weist die Magnethalterung Rasthaken auf, die sich mit dem Spulenkörper verbeißen. Auf diese Weise kann der Magnet sich nicht bei der Rotation der Drahtspule von seiner vorgesehenen Position in Relation zu der Spulenwand bewegen oder einfach wieder herausfallen. Dadurch kann insbesondere gewährleisten werden, dass die Anzahl n verbleibender Drahtwindungen zwischen Stabmagneten und Spulenwand tatsächlich der vorgesehenen Anzahl n verbleibender Drahtwindungen entspricht.

In einer weiteren vorteilhaften Ausgestaltung der erfindungsgemäßen Drahtspule weist die Drahtspule Halterungen für ein gerades Drahtende und / oder einen geraden Drahtanfang auf. Im Stand der Technik ist es bislang meist nur möglich, das an dem Spulenkörper befestigte Drahtende umzubiegen, um es so vor der Bewicklung der Drahtspule am Spulenkörper zu fixieren. Ebenfalls wird meist bei einer Spule, die teilweise abgewickelt wurde, nun aber ausgetauscht und gelagert wird der offene Drahtanfang umgebogen, um zu verhindern, dass sich die Drahtwindungen durch ihre Eigenspannung zumindest teilweise von alleine Abwickeln. Ein Grund für einen solchen Austausch von Spulen ist zum Beispiel der Wechsel der Drahtfarbe oder anderen Drahtparametern, ohne dass die Drahtspule bereits vollständig verbraucht wäre, etwa bedingt durch einen Auftragswechsel. Das Umbiegen des Drahtanfangs wirkt sich aber negativ auf die weitere Verarbeitung aus, wenn die Drahtspule wieder verwendet wird. Die drahtverarbeitende Vorrichtung wird in der Regel keinen umgebogenen oder auch zurückgebogen Drahtanfang akzeptieren, so dass der Benutzer ein Werkzeug zur Hilfe nehmen muss, um den umgebogenen Drahtanfang zu entfernen, beispielsweise eine Drahtzange. Mit einer Halterung für den Drahtanfang an der Spule, bei der der Drahtanfang nicht gebogen wird, ist das nicht erforderlich. Ein gerades Drahtende hat den einfachen Vorteil, dass das Drahtende nicht zusätzlich umgebogen werden muss.

In einer weiteren vorteilhaften Ausgestaltung der erfindungsgemäßen Drahtspule weist die Drahtspule eine Halterung für ein gerades Drahtende auf, wobei die Halterung ein Rastelement aufweist, der das Herausziehen des Drahtendes aus der Halterung verhindert. Dadurch kann auf einfache Weise erreicht werden, dass nach dem bloßen Einstecken des Drahtendes dieses sich verhakt und die folgenden Windungen straff gespannt und Windung an Windung aufgewickelt werden können. Vorteilhafterweise hat die Öffnung zum Einstecken des Drahtendes eine Einsteckschräge, um das Einstecken einerseits zu erleichtern, andererseits ein möglichst ungebogenes Drahtende vorzufinden. In einer besonders vorteilhaften Ausgestaltung der erfindungsgemäßen Drahtspule hat das Rastelement eine Sollbruchstelle, so dass bei einem gewissen Zug, der aufgebracht wird, wenn der Draht von der Drahtspule abgezogen wird, und der den Zug zum idealen Aufwickeln überschreitet, das Rastelement zerstört wird und das Drahtende freigegeben wird. Auf diese Weise kann der Draht vollständig von der Drahtspule abgewickelt werden. Außerdem wird so verhindert, dass die drahtverarbeitende Vorrichtung versehentlich die Drahtspule aus der Halterung reißt oder andere Beschädigungen vorkommen können, etwa in der Drahtzuführung. Vorteilhafterweise handelt es sich bei dem Material der Halterung um Federbandstahl.

In einer weiteren vorteilhaften Ausgestaltung der erfindungsgemäßen Drahtspule weist die Drahtspule Halterungen für einen geraden Drahtanfang auf, wobei die Halterungen am Umfang mehrfach vorhanden sind. Auf diese Weise kann gewährleistet werden, dass stets nur ein kurzes gerades Drahtstück aus der nächstgelegenen Halterung für den Drahtanfang herausragt. Das hat einerseits den Vorteil, dass die Verletzungsgefahr sinkt, andererseits wird die Wahrscheinlichkeit verbessert, dass der gerade Drahtanfang beim erneuten Verwenden der Drahtspule wieder in die drahtverarbeitenden Vorrichtung problemlos eingefädelt werden kann und nicht bei der Lagerung beschädigt wurde, z.B. umgebogen ist. Vorteilhafterweise handelt es sich bei der Halterung um am Spulenrand ausgeprägte, zulaufende, konische Klemmführungen, zwischen die der Drahtanfang über eine längere Strecke geklemmt wird. In einer besonders vorteilhaften Ausgestaltung sind zwischen den Klemmführungen Hinterschnitte angeformt, hinter die der Draht beim Festklemmen schnappen muss. Der Anwender erhält dadurch eine taktile Rückmeldung, ob er den Drahtanfang auch sicher eingeklemmt hat. Außerdem kann die Verklemmung des Drahtanfangs durch eine derartige Maßnahme weiter verbessert werden. Allerdings können alternativ auch eine große Zahl anderer Halterungsmechanismen verwendet werden, die dem Fachmann aufgrund seines Fachwissens bekannt sind.

In einer weiteren vorteilhaften Ausgestaltung der erfindungsgemäßen Drahtspule wird die Drahtspule in einer Vorrichtung zur Herstellung von Drahtkammbindeelementen verwendet, wobei die Drahtkammbindeelemente insbesondere flexibel mit unterschiedlichen Parametern wie Schlaufenlänge und Schlaufenanzahl gefertigt werden. Besonders hier ist es sinnvoll zu wissen, ob für das als nächstes zu fertigende Drahtbindeelement noch ausreichend Draht vorhanden ist, oder nicht, da sich die Drahtbindeelemente in ihrer Größe und damit in dem benötigten Draht erheblich unterscheiden können.

Außerdem umfasst der erfinderische Gedanke ein Verfahren zur Restdrahterkennung von Draht auf einem Spulenkörper, mit den Schritten: Bereitstellen einer erfindungsgemäßen Drahtspule, Bereitstellen eines Magnetsensors in einer Wirkbeziehung mit dem Magneten im Spulenkörper; Detektieren eines elektrischen Signals vom Magnetsensor in Ansprechen auf die Abwesenheit von Draht zwischen dem Magnetsensor und dem Magneten; und Signalisieren der verbleibenden Drahtwindungen auf der Drahtspule an eine übergeordnete Elektronik

Bei dem Magnetsensor handelt es sich insbesondere um ein Reed-Relais, alternativ kann auch eine Hallsonde oder ein vergleichbarer Mechanismus verwendet werden. Durch diese Verfahren ist es nun möglich, bei einer Vorrichtung, die eine Aufnahmestelle für eine erfindungsgemäße Drahtspule aufweist, und die einen entsprechenden Magnetsensor aufweist, die Restdrahtmenge auf der Drahtspule bis auf 1 bis 2 Drahtwindungen genau zu bestimmen. Bei einer Drahtspule mit einem Umfang von ca. 1 m bedeutet das, dass die Restdrahtmenge auf etwa 1 bis 2 Meter genau erfassbar ist, in dem Moment, in dem die Drahtspule bis auf n Windungen abgerollt ist. Eine geeignete Steuerung kann daraus die Gesamtlänge des verbliebenen Drahtes bestimmen, sobald sie das Signal des Magnetsensors erhalten hat und kann diese Information nutzen, um einem Bediener mitzuteilen, wie viele Werkstücke oder Halbzeuge er aus dem Restdraht auf der Drahtspule noch fertigen kann. Vorteilhafterweise handelt es sich dabei um eine Restdrahtlänge, die in jedem Fall noch ausreichend ist, um das angefangene Werkstück oder Halbzeug zu beenden und günstiger Weise noch ein oder zwei weitere Werkstücke oder Halbzeuge zu fertigen. Das ist insbesondere dann von Vorteil, wenn die übergeordnete Steuerung weiß, wie viel Draht die folgenden Werkstücke oder Halbzeuge benötigen, insbesondere, wenn die Drahtmenge von einem Werkstück oder Halbzeug zum nächsten variiert. Vorteilhafterweise signalisiert die Übergeordnete Steuerung dem Benutzer der drahtverarbeitenden Vorrichtung das nahende Drahtende, akustisch, auf einer Benutzeroberfläche, optisch oder durch andere, dem Fachmann bekannte Mechanismen.

Bevorzugte Ausführungsformen der erfindungsgemäßen Vorrichtung werden im Folgenden unter Bezugnahme auf die Zeichnung im Einzelnen näher beschrieben. Es zeigen in schematischer Darstellung:
- Fig. 1a: eine schematische Seitenansicht des magnetischen Feldes des Magneten bei Vorhandensein des Drahtes;
- Fig. 1b: eine schematische Vorderansicht des magnetischen Feldes des Magneten bei Vorhandensein des Drahtes;
- Fig. 1c: eine schematische Seitenansicht des magnetischen Feldes des Magneten bei Abwesenheit des Drahtes;
- Fig. 1d: eine schematische Vorderansicht des magnetischen Feldes des Magneten bei Abwesenheit des Drahtes;
- Fig. 2a: eine schematische Darstellung der oberen Hälfte der erfindungsgemäßen Drahtspule in Draufsicht;
- Fig. 2b: eine schematische Darstellung der oberen Hälfte der erfindungsgemäßen Drahtspule in Seitenansicht;
- Fig. 3a: vergrößerte schematische Detailansicht des Bereichs um den Magneten in der erfindungsgemäßen Drahtspule in einer ersten Ausführungsform;
- Fig. 3b: vergrößerte schematische Detailansicht des Bereichs um den Magneten in der erfindungsgemäßen Drahtspule in einer zweiten Ausführungsform;
- Fig. 4: schematische Detailansicht des Bereichs um den Magneten in der erfindungsgemäßen Drahtspule mit Halterung für den Magneten und das Drahtende;
- Fig. 5a: schematische Draufsicht der Halterung für den Magneten und das Drahtende;
- Fig. 5b: schematische Seitenansicht der Halterung für den Magneten und das Drahtende;
- Fig. 6a: schematische Draufsicht einer Drahtanfangsbefestigung in der Seitenwand der Spule;
- Fig. 6b: schematische Seitenansicht in Drahtrichtung einer Drahtanfangsbefestigung in der Seitenwand der Spule;
- Fig. 6c: vergrößerte schematische Seitenansicht in Drahtrichtung einer Drahtanfangsbefestigung in der Seitenwand der Spule.

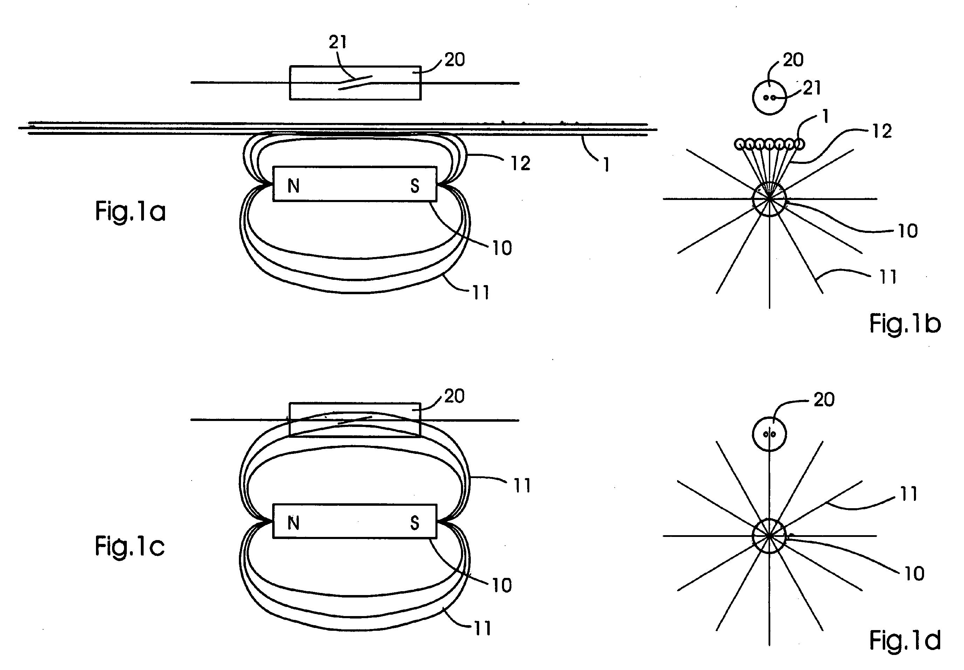

In Figur 1a und 1b ist das Prinzip der Abschirmung der Magnetfeldlinien 11, 12 des Stabmagneten 10 durch den Draht 1 gezeigt. Bei dem Stabmagneten 10 handelt es sich um einen zylindrischen Permanentmagneten wobei die Magnetisierung derart ist, dass die magnetischen Pole jeweils an den Enden des Stabmagneten 10 liegen. Das Magnetfeld erstreckt sich zunächst radial in alle Richtungen aus, wobei die Magnetfeldlinien 11, 12 im Wesentlichen parallel zu der Ausrichtung des Stabmagneten 10 verlaufen. In dem Bereich, in dem die Magnetfeldlinien 12 in den Bereich des ferromagnetischen Drahtes 1 gelangen, verlaufen die Magnetfeldlinien 12 innerhalb des Drahtes 1, das Magnetfeld wird auf der anderen Seite der Drahtwindungen des Drahtes 1 abgeschirmt. Ein dort angebrachtes Reed-Relais 20 spricht daher nicht an. Bei einem Reed-Relais 20 handelt es sich um einen Schalter, der zwei dicht benachbarte Filamente 21 umfasst, die sich bei Vorhandensein eines Magnetfeldes gegenseitig anziehen und dadurch einen Stromkreis schließen. Eine Hall-Sonde ist als Sensor für das Magnetfeld allerdings ebenfalls verwendbar.

Wird nun, wie in den Figuren 1c und 1d der Draht 1 aus dem Zwischenraum zwischen Reed-Relais 20 und Stabmagneten 10 entfernt, insbesondere von der Spulentrommel 30 soweit abgewickelt, dass die Drahtwindungen den Stabmagneten 20 nicht mehr oder nur noch teilweise überdecken, entfällt die abschirmende Wirkung des Drahtes 1 und das Reed-Relais 20 schaltet.

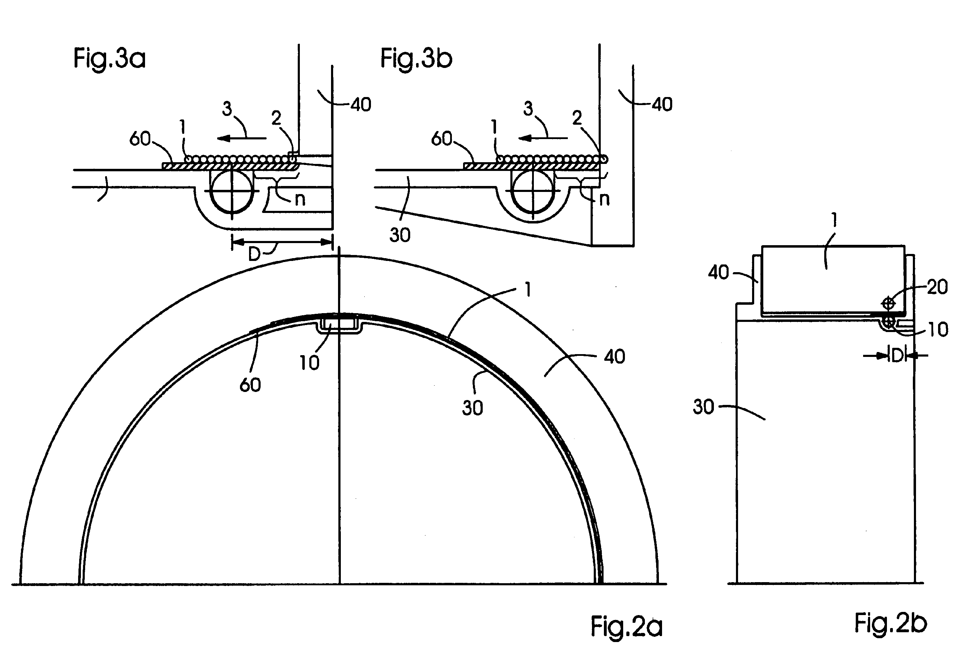

In den Figuren 2a und 2b ist der relevante Ausschnitt einer Ausführungsform der erfindungsgemäßen Drahtspule dargestellt. Um den Aufbau der Drahtspule zu verdeutlichen wurde nur Abschnittsweise der Draht 1 gezeigt, der Draht 1 wird natürlich in kompletten Windungen um die Spulentrommel 30 geschlungen. Der Stabmagnet 10 ist in einer Vertiefung im Spulenkörper 30, 40 befestigt, so dass sein Zylindermantel möglichst dicht an der Oberfläche der Spulentrommel 30 anliegt und der Stabmagnet 10 eine bestimmte Entfernung D zu einer der Spulenwände 40 aufweist. Die Drahtspule wird in einer Vorrichtung verwendet, so dass der in dieser Vorrichtung vorgesehene Magnetsensor 20 im Wesentlichen den gleichen Abstand D bis zur Spulenwand 40 aufweist, wobei Stabmagnet 10 und Magnetsensor im Wesentlichen parallel zueinander sind, sowie im Wesentlichen parallel zu den Drahtwindungen und im Wesentlichen parallel zu den Magnetfeldlinien 11, 12 entlang des Stabmagneten 10.

Wie in den Figuren 3a und 3b zu sehen ist, ist in über dem Stabmagneten 10 auf der Spulentrommel 30 ein doppelseitiges Klebeband 60 angebracht, vermittels die ersten Drahtwindungen auf der Spulentrommel 30 Windung an Windung fixiert werden. Es befinden sich n Windungen zwischen dem Stabmagneten 10 und der Spulenwand 40. Diese n Windungen Draht 1 verbleiben auf der Spulentrommel 30 nach Ansprechen eines Magnetsensors 20, sobald die anderen Windungen wieder abgewickelt wurden. Dazu können je nach Dimensionierung des Stabmagneten 10, Abstand zu dem Magnetsensor 20, Magnetisierung des Stabmagneten, Ansprechschwelle des Magnetsensors 20 und anderen Einflüssen einige wenige zusätzliche Windungen kommen, die den Stabmagneten 10 zwar noch überdecken, aber trotzdem der Magnetsensor bereits angesprochen hat. Die Anzahl dieser zusätzlichen Windungen ist aber kalkulierbar, sobald die oben erwähnten Parameter festgelegt sind und tragen nicht zu einer Unschärfe der Restdrahtmengenbestimmung bei.

Das Drahtende 2 kann durch unterschiedliche Mechanismen an der Spulentrommel 30 oder der Spulenwand 40 befestigt werden, z.B. unter einer aus der Spulenwand 40 nach innen hervorragenden Lippe (Figur 3a), oder in einer Vertiefung innerhalb der Spulenwand 40 (Figur 3b). Nach der Befestigung des Drahtendes 2 an der Drahtspule werden in der mit dem Pfeil 3 gekennzeichneten Befüllrichtung Windung an Windung des Drahtes 1 auf dem Klebeband 60 abgelegt.

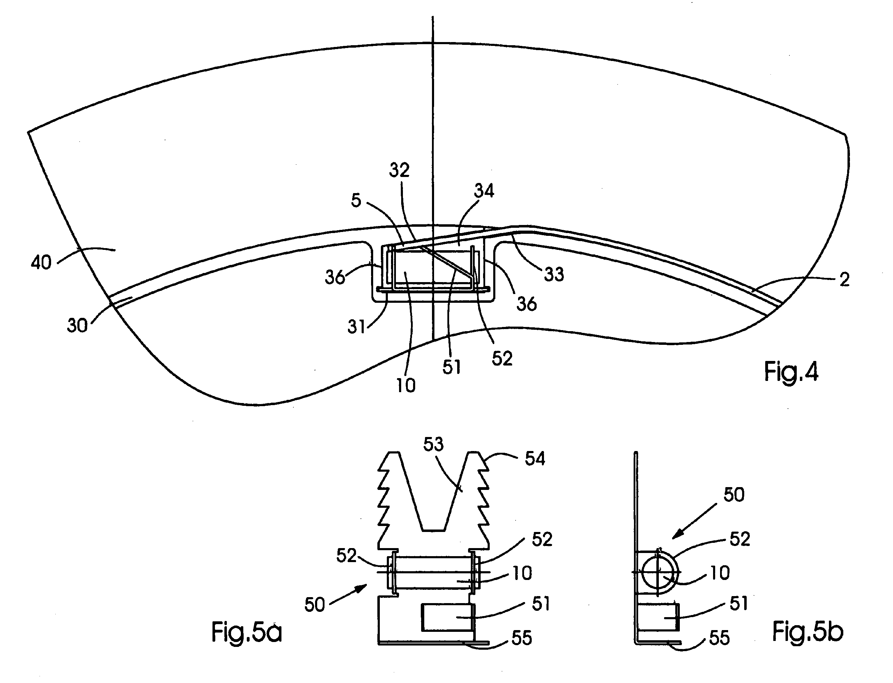

Ein weiterer, bevorzugter Befestigungsmechanismus für das Drahtende 2 ist in Figur 4 gezeigt. Dabei handelt es sich, wie in den Figuren 5a und 5b im Detail gezeigt um die Magnethalterung 50, die seitlich in den Spulenkörper 30 eingesteckt wird. Der Drahtanfang 2 wird hier entlang einer Einlaufflanke 33 in die Aussparung 34 im Bereich der Magnethalterung 50 eingesteckt und durch ein federndes Rastelement 51 gegen die abgeschrägte, mit der Einlaufflanke um eine Drahtdicke versetzt fluchtende Decke 32 der Aussparung 34 gedrückt. Das Rastelement 51 ist dabei derartig ausgestaltet, dass es einem Widerhaken gleich an das Drahtende 2 angestellt ist, so dass das gerade eingesteckte Drahtende 2 nicht zerstörungsfrei aus der Aussparung 34 entnommen werden kann. Das Rastelement 51 ist des weiteren in einer Ausführungsform mit einer Sollbruchstelle versehen, die zu einer Zerstörung des Rastelements 51 führt, wenn das Drahtende mit einer bestimmten Kraft aus der Halterung gezogen wird. Das Zerbersten oder Abbrechen des Rastelements 51 führt zu einem letzten akustischen Signal, dass kein Draht 1 mehr auf der Drahtspule vorhanden ist, so dass der Benutzer einer drahtverarbeitenden Vorrichtung noch einmal Gelegenheit hat, die Drahtabtransport zu unterbrechen. Die Sollbruchstelle im Rastelement kann auch andere Maschinenteile schützen, insbesondere die Aufhängung der Drahtspule und gegebenenfalls deren Antrieb.

Die Magnethalterung 50 weist auf der Trägerplatte 53 aus Federbandstahl, die in den Spulenkörper 30 eingesteckt wird neben Halteelementen 52, die den Magneten 10 fixieren Rastzähne 54, die sich beim Einstecken mit dem Spulenkörper 30, 40 der typischerweise aus einem Kunststoff besteht, verzahnen und so verhindern, dass sich die Position des Magneten 10 im Spulenkörper 30, 40 verändert, was andernfalls zu einer Ungenauigkeit bei der Restdrahterkennung führen würde. Außerdem ist die Trägerplatte 53 an ihrem anderen Ende zu einer Abschlussplatte 55 geknickt, die die Aussparung 34 nach außen verschließt.

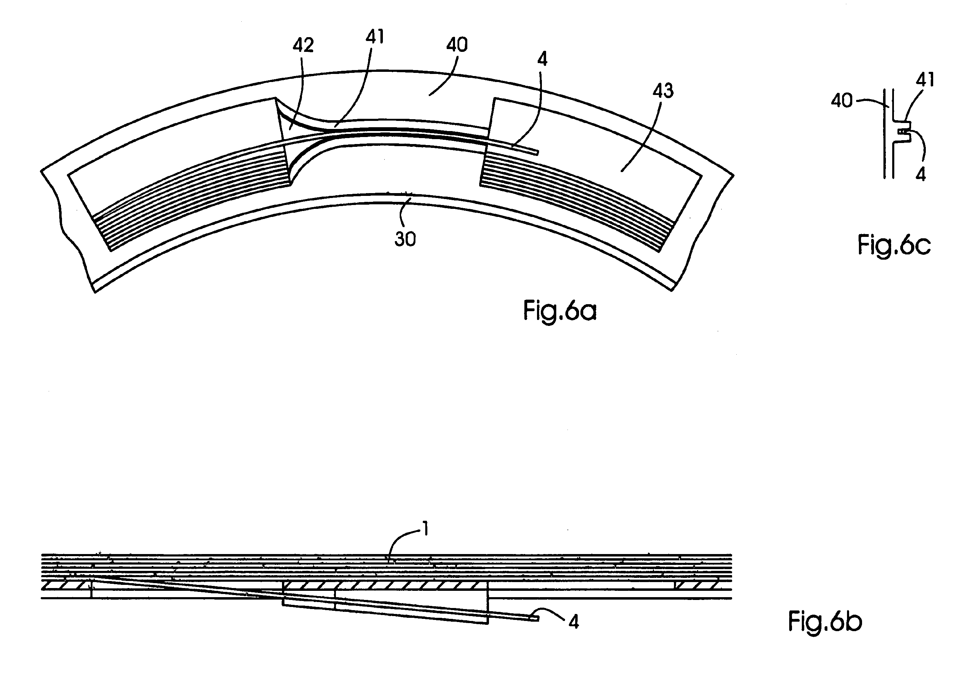

In den Figuren 6a, 6b und 6c sind Details der Befestigung des Drahtanfangs 4 gezeigt. Die Spulenwand 40 hat an der dem Anwender zugewandten Seite mehrere, im vorteilhafterweise gleichmäßig am Umfang verteilte Durchbrüche 43. Zwischen den Durchbrüchen sind zwei konische Klemmführungen 41, die es ermöglichen, den Drahtanfang 4 darin zu verklemmen. Im vorderen Bereich der Klemmführungen 41 ist eine flächige Einfädelhilfe 42 vorgesehen, an dessen Seiten die Klemmführungen zusammenlaufen. Zwischen den Klemmführungen sind nicht gezeigte Hinterschnitte angeformt, hinter die der Draht beim Festklemmen schnappen muss. Der Anwender erhält dadurch eine taktile Rückmeldung, ob er den Drahtanfang auch sicher eingeklemmt hat. Auf diese Weise kann der Drahtanfang 4 straff gespannt und gerade bleiben, so dass bei einem Drahtspulenwechsel dem Anwender unmittelbar ein gerader Drahtanfang 4 zur Verfügung gestellt wird, den er leichter in seine drahtverarbeitenden Vorrichtung einlegen kann.

Im Prinzip ist die Erfindung auch mit einem Elektromagneten mit entsprechender Energieversorgung möglich, bevorzugt ist allerdings, einen Permanentmagneten 10 zu verwenden.

### Liste der Bezugszeichen

- 1: Draht
- 2: Drahtende
- 3: Befüllrichtung
- 4: Drahtanfang
- 10: Magnet
- 11: magnetische Feldlinie
- 12: abgeschirmte magnetische Feldlinie
- 20: Magnetsensor
- 21: Filament
- 30: Spulentrommel
- **31**: **Boden der Aussparung**
- 32: abgeschrägte Decke der Aussparung
- 33: Einlaufflanke
- 34: Aussparung
- 36: Seitenwand der Aussparung
- 40: Spulenwand
- 41: Klemmführung
- 42: Einfädelhilfe
- 43: Durchbruch
- 50: Magnethalterung
- 51: Rastelement
- 52: Halteelement
- 53: Trägerplatte
- 54: Rasthaken
- 55: Abschlussplatte
- 60: Klebeband

## Patentansprüche

1. Drahtspule für Restdrahterkennung für Draht (1) mit einem Drahtanfang (4) und einem Drahtende (2), der auf einem Spulenkörper (30, 40) in N Windungen aufgewickelt ist, wobei der Spulenkörper (30, 40) beidseitig Seitenwände (40) und eine Spulentrommel (30) umfasst, mit einem Magneten (10), der in dem Spulenkörper (30, 40) befestigt ist,
**dadurch gekennzeichnet,**
**dass** die Einbaulauge des Magneten (10) in dem Spulenkörper (30, 40) derart ist, dass die magnetischen Feldlinien (11, 12) entlang des Magneten (10) im Wesentlichen parallel zu der Wickelrichtung des Drahtes (1) auf der Spulentrommel (30) angeordnet sind, so dass Drahtwicklungen (1) oberhalb des Magneten (10) das von dem Magneten (10) ausgehende Magnetfeld abschirmen.

2. Drahtspule nach Anspruch 1,
**dadurch gekennzeichnet,**
**dass** der Magnet (10) eine Entfernung zu einer Spulenwand (40) aufweist, so dass eine bestimmte Anzahl von Drahtwicklungen n auf der Spulentrommel (30) verbleiben, sobald alle Wicklungen über dem Magneten (10) abgewickelt wurden.

3. Drahtspule nach einem der Ansprüche 1 bis 2,
**dadurch gekennzeichnet,**
**dass** die ersten n Windungen auf der Spulentrommel (30) dicht nebeneinander liegen und / oder die ersten n Windungen von einem Klebeelement (60) lose fixiert sind.

4. Drahtspule nach einem der Ansprüche 1 bis 3,
**dadurch gekennzeichnet,**
**dass** eine einsteckbare Magnethalterung (50) vorgesehen ist, vermittels der der Magnet (10) in der Drahtspule positioniert wird.

5. Drahtspule nach Anspruch 4,
**dadurch gekennzeichnet,**
**dass** die Magnethalterung (50) Rasthaken (54) aufweist, die sich mit dem Spulenkörper (30, 40) verbeißen.

6. Drahtspule nach einem der Ansprüche 1 bis 5,
**dadurch gekennzeichnet,**
**dass** die Drahtspule Halterungen (41, 50, 51, 53) für ein gerades Drahtende (2) und/oder einen geraden Drahtanfang (4) aufweist

7. Drahtspule nach einem der Ansprüche 1 bis 6,
**dadurch gekennzeichnet,**
**dass** die Drahtspule eine Halterung (50, 51, 53) für ein gerades Drahtende (2) aufweist, wobei die Halterung (50, 51, 53) ein Rastelement (51) aufweist, das das Herausziehen des Drahtendes (2) aus der Halterung (50, 51, 53) verhindert.

8. Drahtspule nach einem der Ansprüche 1 bis 7,
**dadurch gekennzeichnet,**
**dass** die Drahtspule Halterungen (41) für einen geraden Drahtanfang (4) aufweist, wobei die Halterungen (41) am Umfang der Spulenwände (40) mehrfach vorhanden sind.

9. Drahtspule nach einem der Ansprüche 1 bis 8,
**dadurch gekennzeichnet,**
**dass** die Drahtspule in einer Vorrichtung zur Herstellung von Drahtkammbindeelement verwendet wird wobei die Drahtkammbindeelemente insbesondere flexibel mit unterschiedlichen Parametern wie Schlaufenlänge und Schlaufenanzahl gefertigt werden.

10. Verfahren zur Restdrahterkennung von Draht (1) auf einer Spulentrommel (30) einer Drahtspule nach einem der Ansprüche 1 bis 9, mit den folgenden Schritten:
Bereitstellen eines Magnetsensors (20) in einer Wirkbeziehung mit dem Magneten (10) im Spulenkörper (30, 40)
Detektieren eines elektrischen Signals vom Magnetsensor (20) in Ansprechen auf die Abwesenheit von Draht (1) zwischen dem Magnetsensor (20) und dem Magneten (10); und
Signalisieren der verbleibenden Drahtwindungen auf der Drahtspule an eine übergeordnete Elektronik

## Claims

1. Wire spool for detecting the remaining wire for wire (1) having a leading wire end (4) and a trailing wire end (2) and being wound on a spool body (30, 40) in N windings, the wire body (30) 40) having side walls (40) on both sides and a spool drum (30), the spool comprising a magnet (10) fastened in the spool body (30, 40)
**characterized in**
**that** the installation position of the magnet (10) in the spool body (30, 40) is such that the magnetic field lines (11, 12) along the magnet (10) are substantially parallel to the winding direction of the wire (1) on the spool drum (30) so that wire windings (1) above the magnet (10) screen off the magnetic field emanating from the magnet (10).

2. Wire spool according to claim 1,
**characterized in**
**that** the magnet (10) is a distance to one spool wall (40) such that a specific number of wire windings n remains on the spool drum when all the windings above the magnet (10) have been unwound.

3. Wire spool according to one of claims 1 to 2,
**characterized in**
**that** the first n windings on the spool drum (30) are closely adjacent to each other and/or that the first n windings are loosely fastened by an adhesive element (60).

4. Wire spool according to one of claims 1
**characterized in**
**that** an insertable magnet mount (50) for positioning the magnet (10) in the wire spool is provided.

5. Wire spool according to claim 4,
**characterized in**
**that** the magnet mount (50) has latching hooks (54) that engage with the spool body (30, 40).

6. Wire spool according to one of claims 1 to 5,
**characterized in**
**that** the wire spool has a holding device (41, 50, 51, 53) for a straight trailing wire end (2) and/or a straight leading wire end.

7. Wire spool according to one of claims 1 to 6,
**characterized in**
**that** the wire spool includes holding devices (41) for a straight trailing wire end (2), the holding device (50, 51, 53) having a latching element (51) that prevents the trailing wire end (2) from being pulled out of the holding device (50, 51, 53).

8. Wire spool according to one of claims 1 to 7,
**characterized in**
**that** the wire spool includes holding devices (41) for a straight leading wire end (4), with a number of holding devices (41) being present on the circumference of the spool walls (40).

9. Wire spool according to one of claims 1 to 8,
**characterized in**
**that** the wire spool is used in a device for producing wire comb binding elements, in particular for producing wire comb binding elements in a flexible way with different parameters such as loop length and number of loops.

10. Method of detecting the remaining wire of a wire (1) on a spool drum (30) of a wire spool (30) according to one of claims 1 to 9 comprising the steps of
providing a magnet sensor (20) in a operative relationship with the magnet (10) in the spool body (30, 40),
detecting an electrical signal from the magnet sensor (20) in response to the absence of wire (1) between the magnet sensor (20) and the magnet (10); and
signalling the remaining wire windings on the wire spool to a higher-level electronic system.

## Revendications

1. Bobine de fil pour détecter le fil résiduel pour du fil (1) avec un début de fil (4) et une fin de fil (2), qui est enroulé sur un corps de bobine (30, 40) en N enroulements, le corps de bobine (30, 40) comprenant des deux côtés des parois latérales (40) et un tambour de bobine (30), avec un aimant (10), qui est fixé dans le corps de bobine (30, 40), **caractérisée en ce que**, la position de montage de l'aimant (10) dans le corps de bobine (30, 40) est telle que les lignes de champ (11, 12) magnétiques sont disposées le long de l'aimant (10) sensiblement parallèlement au sens d'enroulement du fil (1) sur le tambour de bobine (30), de sorte que les enroulements de fil (1) au-dessus de l'aimant (10) assurent un blindage contre le champ magnétique émanant de l'aimant (10).

2. Bobine de fil selon la revendication 1, **caractérisée en ce que**, l'aimant (10) présente une distance à une paroi de bobine (40) de sorte qu'un certain nombre d'enroulements de fil n reste sur le tambour de bobine (30), dès que tous les enroulements sont déroulés au-dessus de l'aimant (10).

3. Bobine de fil selon l'une quelconque des revendications 1 à 2, **caractérisée en ce que**, les n premiers enroulements sur le tambour de bobine (30) sont juxtaposés de façon dense et/ou les n premiers enroulements sont fixés de façon amovible par un élément de collage (60).

4. Bobine de fil selon l'une quelconque des revendications 1 à 3, **caractérisée en ce que**, une fixation d'aimant (50) emboîtable est prévue, au moyen de laquelle l'aimant (10) est positionné dans la bobine de fil.

5. Bobine de fil selon la revendication 4, **caractérisée en ce que**, la fixation d'aimant (50) présente des crochets d'arrêt (54) qui s'engagent avec le corps de bobine (30, 40).

6. Bobine de fil selon l'une quelconque des revendications 1 à 5, **caractérisée en ce que**, la bobine de fil présente des fixations (41, 50, 51, 53) pour une extrémité de fil (2) droite et/ou un début de fil (4) droit.

7. Bobine de fil selon l'une quelconque des revendications 1 à 6, **caractérisée en ce que**, la bobine de fil présente une fixation (50, 51, 53) pour une extrémité de fil (2) droite, la fixation (50, 51, 53) présentant un élément d'arrêt (51), qui empêche la sortie de l'extrémité du fil (2) de la fixation (50, 51, 53).

8. Bobine de fil selon l'une quelconque des revendications 1 à 7, **caractérisée en ce que**, la bobine de fil présente des fixations (41) pour un début de fil (4) droit, les fixations (41) étant présentes de façon multiple sur le pourtour des parois de bobine (40).

9. Bobine de fil selon l'une quelconque des revendications 1 à 8, **caractérisée en ce que**, la bobine de fil est utilisée dans un dispositif pour la fabrication d'éléments d'attache de peigne de fil, les éléments d'attache de peigne de fil étant fabriqués en particulier de façon souple avec différents paramètres comme la longueur de boucle et le nombre de boucles.

10. Procédé pour détecter le fil résiduel de fil (1) sur un tambour de bobine (30) d'une bobine de fil selon l'une quelconque des revendications 1 à 9, présentant les étapes suivantes :
mise à disposition d'un capteur magnétique (20) dans une relation active avec l'aimant (10) dans le corps d'aimant (30, 40),
détection d'un signal électrique venant du capteur magnétique (20) en réaction à l'absence de fil (1) entre le capteur magnétique (20) et l'aimant (10), et
signalisation des enroulements de fil restants sur la bobine de fil à une électronique prioritaire
